(19) Europäisches Patentamt

European Patent Office

Office européen des brevets

(11) Veröffentlichungsnummer: **0 222 230 B1**

## (12) EUROPÄISCHE PATENTSCHRIFT

(45) Veröffentlichungstag der Patentschrift: **12.06.91**

(21) Anmeldenummer: **86114740.3**

(22) Anmeldetag: **23.10.86**

(51) Int. Cl.⁵: **G01G 19/08, B60P 5/00**

(54) **Anbauwaage, insbesondere zur Anbringung an einem Traktor.**

(30) Priorität: **09.11.85 DE 3539825**

(43) Veröffentlichungstag der Anmeldung:
**20.05.87 Patentblatt 87/21**

(45) Bekanntmachung des Hinweises auf die
Patenterteilung:
**12.06.91 Patentblatt 91/24**

(84) Benannte Vertragsstaaten:
**BE DE FR GB IT NL**

(56) Entgegenhaltungen:
**EP-A- 0 181 034**
**FR-A- 1 410 658**
**US-A- 2 877 906**

(73) Patentinhaber: **De Dissel Beheer B.V.**
**Dinxperloosestraatweg 88**
**NL-7122 JH Aalten(NL)**

(72) Erfinder: **Ansink, Jan Christiaan**
**Dinxperloosestraatweg 143**
**Ijzerlo NL-7120 AA Aalten(NL)**

(74) Vertreter: **Schulze Horn, Stefan, Dipl.-Ing.**
**M.Sc.**
**Goldstrasse 36**
**W-4400 Münster(DE)**

## Beschreibung

Die Erfindung betrifft eine Anbauwaage der im Oberbegriff des Patentanspruchs 1 angegebenen Art.

Eine Anbauwaage der genannten Art ist aus der EP-B-0 181 034 (veröffentlicht am 11.1.89) bekannt. Bei dieser Waage bilden die Rahmen mit den elastischen Verbindungsgliedern in Seitenansicht eine Parallelogramm-Struktur, wobei die beiden Rahmen in zwei im wesentlichen vertikal und parallel zueinander verlaufenden Ebenen angeordnet sind. Bei Belastung des Lastrahmens mit einer zu wägenden Last bewegt sich dieser elastisch gegenüber den Tragrahmen, wobei durch einen elektronischen, an sich bekannten Lastaufnehmer, das Gewicht der Last bestimmt wird. Die Last, z. B. ein Futtermittelbehälter, eine Wägeplattform oder sonstige Anbaueinrichtung ist dabei an der freien Seite des Lastrahmens angebracht und steht nach außen bzw. hinten ab. Damit liegt der Schwerpunkt der Last außerhalb der Ebene des Lastrahmens. Dies führt dazu, daß außer einer vertikal nach unten gerichteten Kraftkomponente auch ein Drehmoment auf den Lastrahmen ausgeübt wird. Dieses Drehmoment führt bei der bekannten Waage dazu, daß die oberen Blattfedern auf Zug, die unteren Blattfedern jedoch auf Schub beansprucht werden. Bei den auf Schub beanspruchten Blattfedern kann es nachteilig sehr leicht zu einem Ausweichen oder Ausbeulen nach oben oder unten kommen, wodurch die Federn beschädigt oder sogar zerstört werden können. Zwar wird bei der bekannten Waage vorgeschlagen, die Blattfedern in aufwendiger Weise mit aufgeschweißten Verstärkungsplatten zu versehen, die über annähernd die gesamte freie Länge der Feder reichen, jedoch wird hiermit der beschriebene technische Nachteil nicht vermieden, sondern lediglich kaschiert.

Hinzu kommt als Nachteil, daß die mit den Verstärkungsplatten versehenen Federn bei Belastung des Tragrahmens in einem sehr kleinen Biegeradius gebogen und damit lokal sehr stark beansprucht werden. Hierdurch kann es wiederum zu Schäden an den Blattfedern kommen. Zugleich ist aufgrund der geschilderten Ausführung der Federn mit Verstärkungsplatten eine Linearität der Auslenkung des Lastrahmens in Abhängigkeit von dessen Belastung nicht mehr gewährleistet. Diese Linearität ist jedoch Voraussetzung für ein genügend genaues Wägeergebnis. Nachteilig ist bei der bekannten Waage auch noch deren relativ große Baulänge, die vor allem daraus resultiert, daß Tragrahmen und Lastrahmen in zwei getrennten, horizontal versetzten Ebenen hintereinander angeordnet sind. Dies führt zu einer unerwünschten Verlagerung des Schwerpunktes der Kombination von Traktor bzw. Fahrzeug, Anbauwaage und Wägebehälter bzw. Wägegut nach hinten und damit zu einer ungünstigen Entlastung der Traktor- bzw. Fahrzeug-Vorderachse. Eine Verringerung der Baulänge der Anbauwaage kann nur durch Verringerung der Abmessungen der die Rahmen bildenden Profile und damit auf Kosten der Stabilität und Haltbarkeit erfolgen. Schließlich sei noch als Nachteil angeführt, daß eine Verwendung der bekannten Waage lediglich in Verbindung mit einem Traktor oder anderen Fahrzeug vorgesehen ist, was eine begrenzte Flexibilität beim Einsatz zur Folge hat.

Es stellt sich daher die Aufgabe, eine Anbauwaage der eingangs genannten Art zu schaffen, welche die aufgeführten Nachteile vermeidet und welche insbesondere eine Schubbelastung und sonstige ungünstige Beanspruchungen der Blattfedern vermeidet und welche Wägungen mit guter Genauigkeit erlaubt. Weiterhin soll die Waage bei kleiner Baulänge eine große Stabilität aufweisen und universell einsetzbar sein.

Die Lösung dieser Aufgabe gelingt erfindungsgemäß durch eine Anbauwaage der eingangs genannten Art, bei welcher die untere(n) Blattfeder(n) mit ihrem trägerseitigen Ende mit dem Lastrahmen und mit ihrem lastseitigen Ende mit dem Tragrahmen kraftschlüssig verbunden ist/sind.

Durch diese Anordnung der Blattfedern und die entsprechende Gestaltung der beiden Rahmen wird im Unterschied zum Stand der Technik erreicht, daß sowohl die oberen als auch die unteren Blattfedern bei Belastung des Lastrahmens außer auf Biegung nur auf Zug beansprucht werden. Belastungen in Schubrichtung können dagegen nicht mehr auftreten und damit entfallen die aufwendige Anbringung von Verstärkungsplatten und die damit einhergehenden, oben beschriebenen Nachteile. Im Gegensatz zu der bekannten Waage bilden bei der Waage gemäß Erfindung die Rahmen und die Blattfedern in Seitenansicht nämlich keine Parallelogramm-Struktur, sondern - anschaulich gesagt - im Prinzip eine "X-Struktur", wobei jeweils die oberen und die unteren Enden der beiden X-Balken, die dem Rahmen entsprechen, durch die Blattfedern miteinander verbunden sind und wobei im Schnittpunkt der beiden X-Balken keinerlei Verbindung zwischen diesen besteht. Die freie Länge der Blattfedern steht damit vollständig für die elastische Verformung zur Verfügung, so daß nur eine geringe spezifische Belastung der Federn auftritt und eine gute Linearität der Auslenkung des Lastrahmens in Abhängigkeit von dessen Belastung gewährleistet ist.

Zur Erzielung einer möglichst kurzen Baulänge und zugleich hohen Stabilität der Anbauwaage ist vorgesehen, daß die beiden Rahmen eine nach unten hin offene U-Form unterschiedlicher Größe aufweisen und unter Freigang ineinandergesetzt im wesentlichen in einer gemeinsamen Ebene angeordnet sind. In dieser Ausgestaltung der Waage umgibt also ein äußerer U-Rahmen an drei Seiten, nämlich den Außenseiten und der Oberseite, einen inneren, kleineren U-Rahmen, wobei vorzugsweise der äußere U-Rahmen den Tragrahmen und der innere U-Rahmen den Lastrahmen bildet. Die gesamte Baulänge der Waage entspricht damit nur etwa der Baulänge eines einzelnen Rahmens und ist somit sehr klein. Gleichzeitig können die Rahmen ausreichend stark dimensioniert werden, um eine hohe Stabilität und Langzeithaltbarkeit auch bei den z. B. in der Landwirtschaft auftretenden rauhen Einsatzbedingungen zu gewährleisten. Zu dieser hohen Stabilität trägt bei, daß in weiterer Ausgestaltung der Tragrahmen trägerseitig und der Lastrahmen lastseitig mit je einem Querriegel und je zwei vom mittleren Rahmenbereich schräg nach außen und unten verlaufenden Diagonalstreben versteift sein können und daß vorzugsweise die Rahmen aus im Querschnitt rechteckigen Hohlprofilen bestehen.

Ein schnelles und einfaches Verbinden der Waage mit ihrem Träger, z. B. einem Traktor, und Trennen von diesem wird vorzugsweise dadurch erreicht, daß der Tragrahmen trägerseitig Aufnahmeelemente für die Anbringung der Anbauwaage an einer Dreipunkt-Kupplung z. B. des Traktors aufweist und daß der Lastrahmen lastseitig Kupplungselemente in der Form und Anordnung der Dreipunkt-Kupplung des Traktors oder in Form und Anordnung einer Dreieck-Schnellkupplung aufweist. Außerdem kann so die Anbauwaage als wahlweise vorhandenes Zwischenglied zwischen dem Träger und einem beliebigen, an sich unmittelbar mit dem Träger zu verbindenden oder zu kuppelnden Anbaugerät eingesetzt werden.

Bevorzugt ist der Lastaufnehmer auf der Oberseite des Querriegels des Tragrahmens angeordnet und weist der Lastrahmen oberhalb des Lastaufnehmers eine vorspringende Druckpratze auf, welche mit ihrer Unterseite auf dem Lastaufnehmer aufliegt. Bei dieser Anordnung ist der Lastaufnehmer relativ gut gegen mechanische Einwirkungen und Verschmutzung geschützt und doch für Reparatur- oder Einstellarbeiten gut zugänglich. Um den Lastaufnehmer in seinem optimalen Arbeitsbereich betreiben zu können und um Fertigungstoleranzen der Rahmen ausgleichen zu können, ist zweckmäßig zwischen zwischen Lastaufnehmer und Druckpratze ein längenverstellbares, mit dem Lastaufnehmer oder der Druckpratze verbundenes Zwischenglied, wie Gewindebolzen, angeordnet. Dem zuletzt genannten Zweck dient weiterhin, daß das Zwischenglied einen um eine im wesentlichen vertikale Achse verdrehbaren und arretierbaren Exzenteraufsatz aufweist.

Zur Niedrighaltung des Herstellungsaufwandes und um eine unkontrollierte Veränderung der Federeigenschaften zu vermeiden, werden die Blattfedern vorzugsweise mit den Rahmen bzw. mit die Verbindung zwischen Rahmen und Federn darstellenden Halteplatten nicht verschweißt, sondern verschraubt. Zudem erleichtert dies ein Auswechseln von Federn. Um einen sicheren und festen Sitz der Federn auf den Halteplatten auch bei hohen Biege- und Zugkräften zu gewährleisten, ist vorgesehen, daß die Enden der Blattfedern jeweils umgebogen sind und hinter die die Verbindung zwischen Federn und Rahmen darstellenden Halteplatten greifen.

Eine Fehlerquelle bei Wägungen mit einer derartigen Anbauwaage besteht in Schieflagen der Waage, d. h. Abweichungen von einem weitestgehend vertikalen Verlauf der Rahmen. Geringe Schieflagen von wenigen Grad können hier durchaus toleriert werden, da die Wägefehler mit zunehmender Schieflage der Waage überproportional zunehmen.

Deshalb ist es zweckmäßig, daß die Waage Mittel zur Anzeige einer Abweichung der Rahmen aus ihrer vertikalen Soll-Lage in Form eines frei hängenden Pendels oder einer Libelle aufweist. Abweichungen aus der Soll-Lage der Waage sind so schnell erkennbar und können z. B. durch kurzes Verfahren des Fahrzeuges auf unebenem Untergrund oder durch Lageveränderung der Anbauwaage mittels einer eventuell vorhandenen Traktorhydraulik korrigiert werden.

Bei einem Verfahren eines Traktors mit angebauter Waage und eventuell an dieser angebautem weiterem Gerät, insbesondere auf unruhigem und unebenem Untergrund, treten innerhalb der Waage sehr hohe mechanische Beanspruchungen auf, die für den Lastaufnehmer schädlich sein können. Es ist daher vorgesehen, daß die beiden Rahmen unter Entlastung des Lastaufnehmers, vorzugsweise durch eine Blockierverschraubung, gegeneinander arretierbar sind.

Um die erfindungsgemäße Waage möglichst universell einsetzen zu können, sieht eine Ausgestaltung der Erfindung ein am Tragrahmen angreifendes, mit diesem lösbar zu verbindendes Bodenstandgestell als Träger vor. Mit diesem kann die Waage gemäß Erfindung auch im stationären Betrieb eingesetzt werden. Alternativ zu dem Bodenstandgestell kann auch eine Wandaufhängung für die Waage vorgesehen sein, was ebenfalls die erwähnten Vorteile bringt.

Bevorzugte Ausführungsbeispiele der Erfindung werden im folgenden anhand einer Zeichnung näher erläutert. Die Figuren der Zeichnung zeigen im einzelnen:

Figur 1    eine Anbauwaage gemäß Erfindung in Seitenansicht im Anbauzustand an einem Traktor,

Figur 2    die Waage in perspektivischer Ansicht,

Figur 3a    die Waage im Vertikalschnitt entlang der Linie III - III in Figur 2,

Figur 3b    die Waage in einer modifizierten Ausführung, ebenfalls im Vertikalschnitt, aber mit gegenüber der Figur 3a umgekehrter Blickrichtung,

Figur 4     einen Tragrahmen als Teil der Waage in Frontalansicht,

Figur 5     den Tragrahmen aus Figur 4 in Seitenansicht,

Figur 6     einen Lastrahmen als Teil der Waage in einer Ausführung entsprechend Figur 3b in Frontalansicht und

Figur 7     den Lastrahmen aus Figur 6 in Seitenansicht.

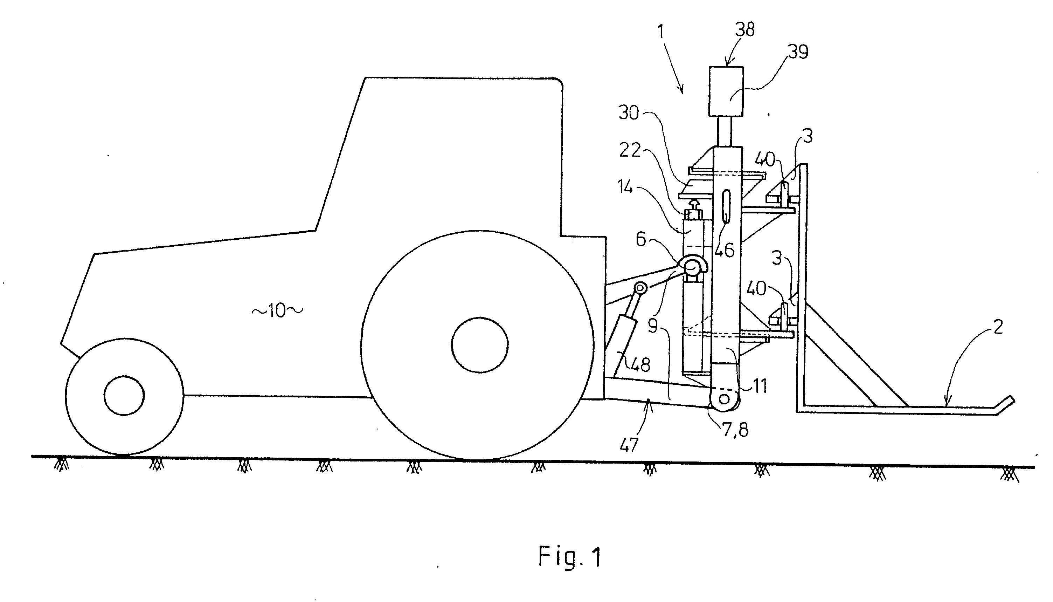

Die Übersichtsdarstellung gemäß Figur 1 zeigt die an einer Dreipunkt-Kupplung 9 eines hier als Träger dienenden Traktors 10 angebrachte Anbauwaage 1. Diese greift mit ihren Aufnahmeelementen 6, 7 und 8 in die Dreipunkt-Kupplung 9 des Traktors 10 ein und ist mit dieser in bekannter Weise schnell trennbar verbunden. Mit einem hydraulischen Hubzylinder 48 kann die Dreipunkt-Kupplung 9 des Traktors 10 in bekannter Weise gehoben und gesenkt werden. Dieses Hubaggregat ist beim An- bzw. Abkoppeln der Anbauwaage 1 sehr hilfreich. In dem in Figur 1 gezeigten Ausführungsbeispiel ist der Anbauwaage 1 eine Wägeplattform 2 zugeordnet, die mit der Anbauwaage 1 an deren Kupplungselementen 40 mit der Plattform 2 zugeordneten Verbindungselementen 3 ebenfalls schnell trennbar verbunden ist. Mit dieser Wägeplattform 2 ist die Anbauwaage 1 als universelle Waage verwendbar zum Abwiegen der unterschiedlichsten Lastgüter. Über das gezeigte Beispiel hinaus kann die Waage 1 auch mit einem Container für Schüttgut, vorzugsweise für Futtermittel, ausgestattet sein. Hieraus ist ersichtlich, welche vielfältigen Möglichkeiten die am Traktor 10 angebrachte Waage 1 bietet, indem sie ihrerseits mit den unterschiedlichsten Zusatzmitteln bestückt werden kann. Beispielsweise kann der Container auch Mittel zum Aufbereiten, Mischen und Verteilen eingewogener Futterchargen aufweisen.

Wie die Zusammenschau der Figuren 1, 2, 3a und 3b zeigt, weist die Anbauwaage 1 einen trägerseitig, d. h. hier traktorseitig, mit den Aufnahmeelementen 6, 7, 8 zum Anschluß an die Dreipunkt-Kupplung 9 des Traktors 10 ausgebildeten Tragrahmen 11 auf. Dieser Tragrahmen 11 ist bei ebenhorizontalem Stand des Traktors 10 vertikal angeordnet. Der Tragrahmen 11 ist U-förmig mit einem oberen, horizontalen Querbalken 12 und zwei abwärtsgerichteten, vertikalen U-Schenkeln 13 ausgebildet und durch einen traktorseitig unterhalb des Querbalkens 12 vorgesetzten Querriegel 14 und von dessen Mittelbereich diagonal zu den unteren Enden 15 der Schenkel 13 verlaufende, mit diesen fest verbundene Diagonalstreben 16 versteift. Zwischen den oberen, im horizontalen Abstand angeordneten Enden 17 der Streben 16 und jeweils an den Außenseiten von deren unteren Enden 18 sind die zum Ankoppeln der Dreipunkt-Kupplung 9 des Traktors 10 vorgesehenen Aufnahmeelemente 6 bis 8 angeordnet. Deren Ausgestaltung ist ersichtlicherweise zu der Dreipunkt-Kupplung 9 des Traktors 10 kompatibel gestaltet und somit in einer an sich bekannten Art und Weise ausgeführt, entsprechend den Kupplungselementen sonstiger mit dem Traktor verbindbarer Anbaugeräte.

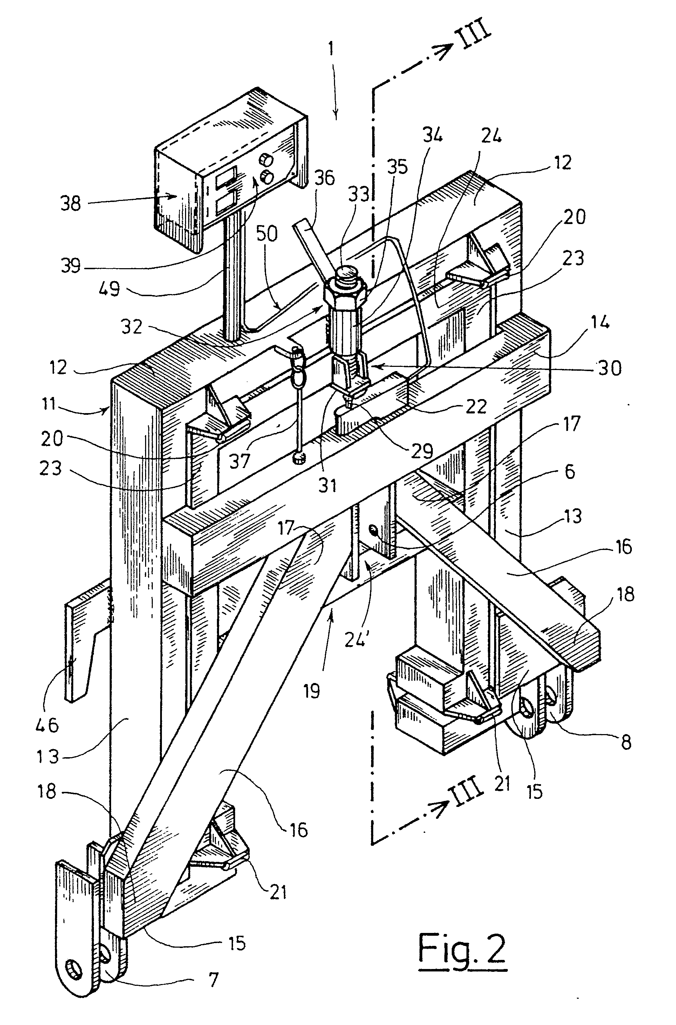

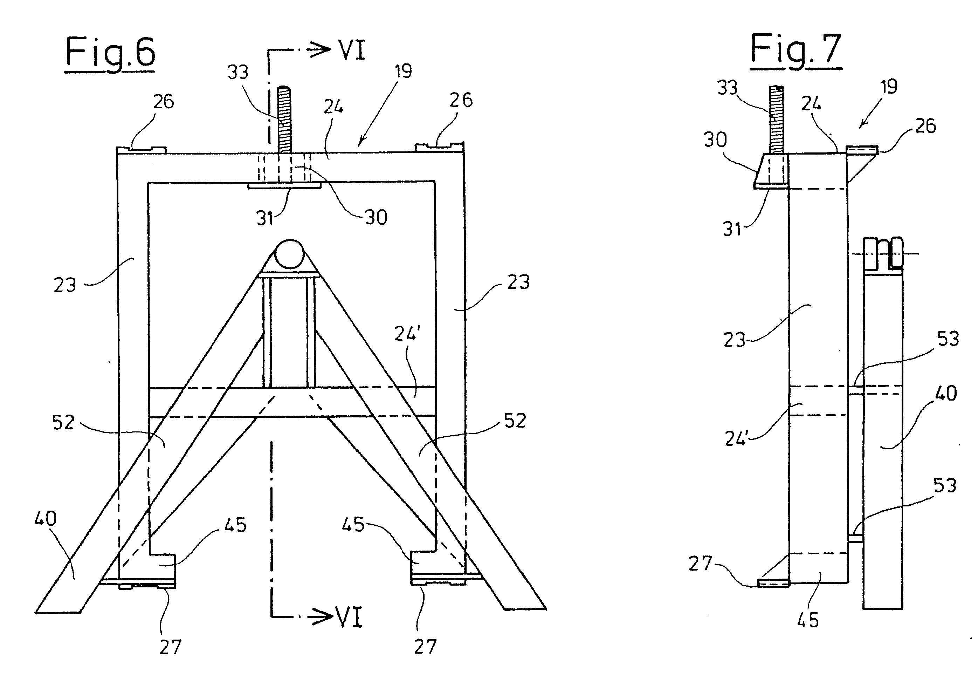

Die Anbauwaage 1 weist weiterhin Mittel zur Lastaufnahme in Form eines starren Lastrahmens 19 auf, dessen beispielsweise Ausgestaltung in den Figuren 6 und 7 im Detail dargestellt ist. Dieser Lastrahmen 19 ist mit Freigangseitlich und nach oben zu innerhalb des Tragrahmens 11 angeordnet, wie Figur 2 zeigt, und durch hier insgesamt vier Blattfedern 20 bzw. 21, in Wirkungsrichtung der zu wägenden Last frei beweglich, am Tragrahmen 11 angelenkt und stützt sich über einen elektrischen bzw. elektronischen Lastgeber 22 am Tragrahmen 11 lastwärts ab.

Auf diese Weise ergibt sich eine außerordentlich robuste, in der horizontalen Baulänge äußerst kurze und unkomplizierte Ausgestaltung dieser Hauptelemente der Anbauwaage. Der Lastrahmen 19 ist im dargestellten Beispiel ebenfalls U-förmig nach unten offen mit zwei vertikalen Schenkeln 23 und einem horizontalen Querbalken 24, die miteinander im rechteckigen Verbund verschweißte Profilstreben sind, ausgebildet. Zur Versteifung dient ein horizontaler Querriegel 24'.

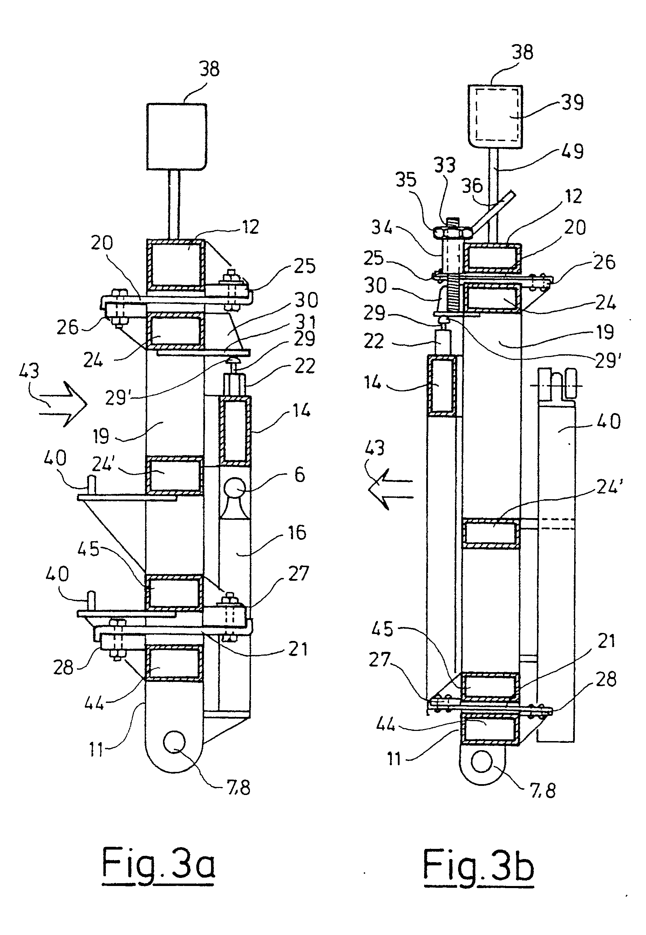

Die Anordnung und Ausbildung des von den vier Blattfedern 20, 21 gebildeten Federgehänges ist insbesondere aus den Schnittdarstellungen der Figuren 3a und 3b erkennbar. Es wird von je zwei oberen Blattfedern 20 und von je zwei unteren Blattfedern 21 gebildet, welche in Fahrtrichtung 43 verlaufend und unter Last jeweils auf Zug beanspruchbar ausgebildet und angeordnet sind. Dabei sind die oberen Federn 20 zwischen jeweils einer von der Unterseite des Querbalkens 12 traktorseitig vorspringenden und entgegengesetzt von der Oberseite des Querbalkens 24 des Lastrahmens 19 zurückspringenden Halteplatten 25, 26 horizontal verlaufend angeordnet. Die unteren Federn 21 sind parallel dazu zwischen jeweils einer von einem Tragschuh 45 an der Unterseite des Lastrahmens 19 traktorseitig vorspringenden und einer entgegengesetzt von einem Tragschuh 44 am unteren Bereich des Tragrahmens 11 zurückspringenden Halteplatte 27, 28 angeordnet. Mittels Schrauben und mit etwa rechtwinklig formschlüssig um die Platten 25, 26, 27 und 28 gebogenen Enden sind die Federn 20 und 21 mit diesen Platten fest, d. h. kraftschlüssig verbunden. Bei einem durch die an den Kupplungselementen 40 angehängte Last hervorgerufene Biegemoment wird folglich das obere Federpaar 20 entgegen der Fahrtrichtung 43 und das untere Federpaar 21 in der Fahrtrichtung 43 jeweils auf Zug beansprucht. Für die Federn ungünstige Schubbelastungen treten nicht auf. Weil die Federn zwischen den Haltelementen 25, 26 bzw. 27, 28 horizontal zueinander parallel verlaufen, behält der Rahmen 19 in Wirkungsrichtung der zu wägenden Last seine freie Beweglichkeit. Dabei ist zu berücksichtigen, daß ein elektronischer Lastaufnehmer unter dem Einfluß der hier in Frage kommenden Last von beispielsweise 1000 kp (10 kN) Auslenkungen in der Größenordnung von einigen Zehntel Millimetern erfährt.

Wie aus den Figuren 1 - 3b ersichtlich ist, ist der Lastgeber 22 auf der Oberseite des Querriegels 14 des Tragrahmens 11 angeordnet und weist an seiner Oberseite einen mittels Gewinde höhenjustierbaren Bolzen 29 mit einem Exzenteraufsatz 29' zur Lastaufnahme auf. Der Lastrahmen 19 besitzt eine nach unten gerichtete vorspringende Druckpratze 30, die mit einer unterseitigen Druckplatte 31 lastabstützend auf dem Druckbolzen 29 aufliegt.

Der Lastaufnehmer 22 ist ein handelsüblicher Drucksensor, beispielsweise mit Dehnungsmeßstreifen ausgerüsteter DMS-Geber; er kann jedoch auch ein mit dem Piezoeffekt angeregter Druckgeber sein. Derartige Drucksensoren sind bekannt und brauchen daher an dieser Stelle nicht weiter beschrieben zu werden. Sie sind robust und arbeiten unter Last annähernd weglos sowie eichfähig genau.

Wesentlich für die Verfahrbarkeit mit dem Traktor 10 besitzt die Anbauwaage 1 Mittel zum Feststellen des Lastrahmens 19 und zum Entlasten des Lastaufnehmers 22 in Form einer Blockierverschraubung 32 zwischen Tragrahmen 11 und Lastrahmen 19, wie die Figuren 2 und 3b zeigen. In der hier beispielsweise gezeigten Ausführung besitzt die Pratze 30 eine mit ihr verschweißte, aufwärts gerichtete Gewindestange 33, welche mit seitlichem Freigang durch eine am Querbalken 12 des Tragrahmens 11 angeordnete Buchse 34 hindurchgeführt ist und am oberen Ende eine Feststellmutter 35 mit angeschweißtem Griff 36 trägt. Beim Anzug der Mutter wird mittels der Gewindestange 33 der Lastrahmen 19 gegen den Querbalken 12 des Tragrahmens 11 zu angehoben und festgesetzt. Damit wird ein Schwingen des Lastrahmens 19 im Tragrahmen 11 verhindert und zugleich der Lastgeber 22 vollständig entlastet.

Um grobe Fehlmessungen durch Schieflage der Waage zu vermeiden, sind weiterhin am Tragrahmen 11 Mittel zur Schieflageanzeige in Form eines frei hängenden Pendels 37 angeordnet. Weil dessen Funktion selbsterläuternd ist, bedarf es hierzu keiner weiteren Ausführungen. Auf dem Tragrahmen 11 ist weiterhin auf einem Ständer 49 ein Gehäuse 38 angeordnet. In diesem ist eine elektronische Auswerte- und Anzeigeeinheit 39 angeordnet, die über Signalleitungen 50 mit dem Lastgeber 22 in elektrischer Verbindung steht. Durch die erhöhte Positionierung der Einheit ist die Anzeige vom Traktor 10 aus gut ablesbar, zumal wenn das Gehäuse 38 drehbar auf dem Ständer 49 angeordnet ist.

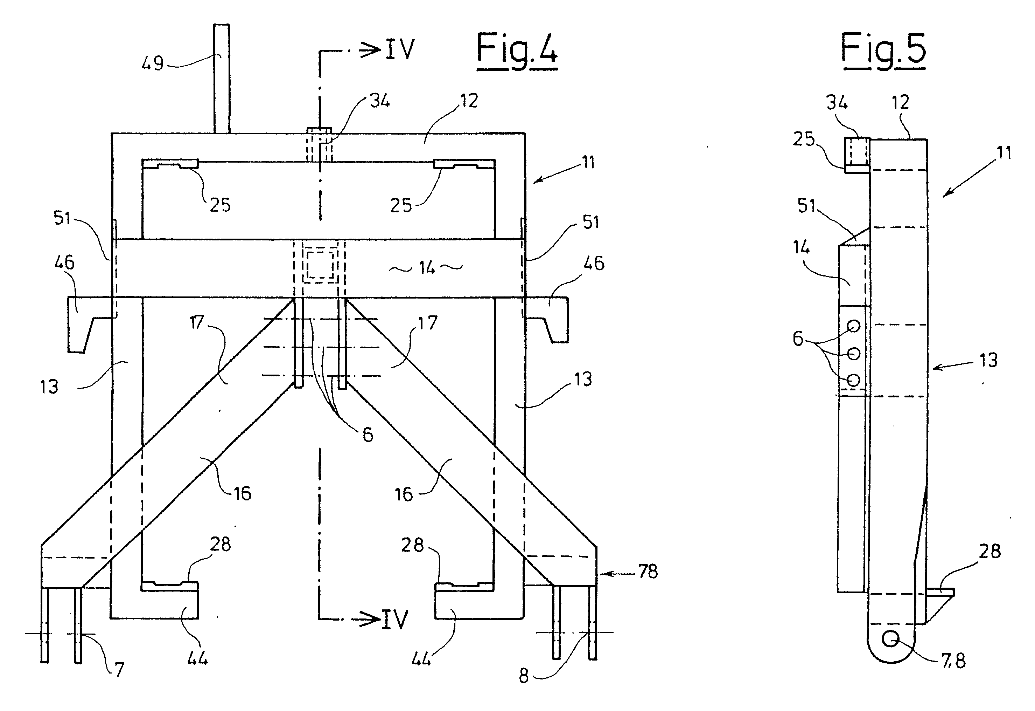

Eine beispielhafte Ausgestaltung des Tragrahmens 11 zeigen die Figuren 4 und 5. Er ist hier U-förmig mit dem Querbalken 12 und den beiden vertikalen Schenkeln 13 ausgebildet und besitzt als Versteifungselement den traktorseitig vorgesetzten Querriegel 14, der über schwere Seitenplatten 51 mit den Schenkeln 13 verschweißt ist. Zur weiteren Versteifung gehen vom Mittelbereich dieses Querriegels 14 Diagonalstreben 16 nach beiden Seiten schräg nach unten ab, die ihrerseits im Überschneidungsbereich mit den Schenkeln 13 fest verbunden sind. An ihren unteren Enden 18 sind die Streben 56 mit den Aufnahmeelementen 7 und 8 ausgebildet. Diese Elemente sind, wie bereits erwähnt, zu den Kupplungsorganen der Dreipunkt-Kupplung 9 des Traktors 10 kompatibel ausgeformt und daher typengenormte Bauteile bekannter Art. Gleiches gilt für das Aufnahmeelement 6, welches zwischen den oberen Enden 17 der Streben 16 in ebenfalls bekannter Art ausgebildet ist.

Aus der Darstellung geht weiterhin die Anordnung der oberen Halteplatten 25 und der unteren Halteplatten 28 für die Blattfedern 20, 21 hervor. Dabei sind die unteren Enden der Schenkel 13 einwärts zu in Form von Tragschuhen 44 ausgebildet, auf denen die unteren Halteplatten 28 angeordnet sind.

Um die Waage 1 nach Abkoppeln vom Traktor 10 in einem Boden-Standgestell frei aufstellen zu können, sind beispielsweise an den Außenseiten der Schenkel 13 hakenförmige Pratzen 46 angeordnet, die als Halterung in einem beliebig ausgebildeten Standgestell oder in einem vertikalen Maueranker des Geräteschuppens dienen können. In einer solchen kippsicheren Lage kann die Waage 1 als stationäre Waage weiter verwendet werden.

Zur besseren Anschauung der räumlichen Gestaltung des Tragrahmens 11 ist dieser in Figur 5 in Seitenansicht und im Schnitt entlang der Ebene IV - IV in Fig. 4 gezeigt. Figur 5 zeigt die Anordnung der Buchse 34 vor dem Querbalken 12 im vertikalen Abstand von der Oberseite des Querriegels 14. Diese Buchse 34 bildet zusammen mit der Gewindestange 33 des Lastrahmens 19 (vgl. Fig. 6 u. 7) ein Teil der Blockierverschraubung 32. Zur Bedeutung der weiteren Bezugsziffern wird auf die vorangehende Beschreibung verwiesen.

Figur 6 zeigt den Lastrahmen 19 von der Lastaufnahmeseite her gesehen. Er besteht aus den beiden horizontalen Streben 24 und 24', die durch die beiden vertikalen Streben 23 zu einem in sich starren Rahmen verbunden sind. Die unteren Enden der vertikalen Streben 23 sind ebenfalls als einwärts gerichtete Tragschuhe 45 ausgebildet und nehmen die Halteplatte 27 für die unteren Federn 21 des Federgehänges auf, während die obere horizontale Strebe 24 auf den äußeren Enden ihrer Oberseite die Halteplatten 26 trägt. Zum Abstützen der Last ist der Rahmen 19 mit der Druckpratze 30 ausgebildet, die nach unten gerichtet die Druckplatte 31 trägt. Diese stützt sich bekanntlich am höhenjustierbaren Druckbolzen 29 des Lastgebers 22 ab (vgl. Fig. 2). Nach oben hin nimmt die Pratze 30 die Gewindestange 33 der Blockierverschraubung 32 in fester Verbindung auf.

Weiterhin sind am lastseitigen Ende des Lastrahmens 19 Kupplungselemente 40 angeordnet. Diese können in einfachster Weise entsprechend der Darstellung in Figur 1 mit Konsolen und Einhängehaken ausgebildet sein.

Als besonders vorteilhaft hat sich jedoch die Ausgestaltung des Lastrahmens 19 entsprechend den Figuren 3b, 6 und 7 erwiesen. Hierbei ist das Verbindungselement zum Anhängen einer Wägeplattform 2, eines Containers oder eines anderen Anbaugerätes mit zwei Profilstreben 52 in V-Form ausgebildet, und zwar mit nach oben gerichteter Spitze. Die Profilstreben 52 sind mit Abstandshaltern 53 in geringem horizontalem Abstand von den Schenkeln 23 diesen vorgesetzt. Dadurch können die anzubauenden unterschiedlichen Anbaugeräte für Lasten, wie Wägeplattform 2, Container oder andere mit entsprechend kompatibel ausgebildeten sattelartigen Gegenverbindungselementen wie im Reitsitz auf die Profilstreben aufgesetzt werden. Infolge der Höhenverstellbarkeit der Dreipunkt-Kupplungdes Traktors 10 ergeben sich somit ein überaus einfacher Anschlußvorgang sowie erleichterte Arbeitsbedingungen.

Die Anbauwaage 1 ist robust, unkompliziert, eignet sich zum Ankoppeln an die Kupplungsorgane einer Dreipunkt-Kupplung eines Traktors und ist in Verbindung mit unterschiedlichen Mitteln zur Lastaufnahme in landwirtschaftlichen Betrieben als Wäge- und Transportvorrichtung universell einsetzbar. Darüber hinaus eignet sich die erfindungsgemäße Waage auch für weitere mobile Anwendungen, wie z. B. an Gabelstaplern oder Radladern als Träger und auch für stationären Einsatz, z. B. mit einem Bodenstandgestell oder einer Wandhalterung als Träger.

**Ansprüche**

1. Anbauwaage zur Anbringung an einem Träger, insbesondere Traktor oder dergleichen Fahrzeug, bestehend aus je einem in sich starren, im wesentlichen in einer vertikalen Ebene angeordneten Tragrahmen (11) und Lastrahmen (19), welche über wenigstens zwei elastische Verbindungsglieder, vorzugsweise im wesentlichen horizontal verlaufende Blattfedern (20, 21) aus Stahl, im oberen und im unteren Rahmenbereich miteinander verbunden und in vertikaler Richtung gegeneinander beweglich sind, wobei die obere(n) Blattfeder(n) (20) mit ihrem trägerseitigen Ende mit dem Tragrahmen (11) und mit ihrem lastseitigen Ende mit dem Lastrahmen (19) kraftschlüssig verbunden ist/sind, wobei der Tragrahmen (11) mit dem Träger verbindbar ist, wobei an dem Lastrahmen (19) ein Behälter (2) oder dergleichen zur Aufnahme von zu wägendem Gut oder eine zu wägende Last anbringbar ist und wobei zwischen den beiden Rahmen (11, 19) ein mit einer Auswerte- und Anzeigeeinheit (39) verbundener elektronischer Lastaufnehmer (22) angeordnet ist,
dadurch gekennzeichnet, daß die untere(n) Blattfeder(n) (21) mit ihrem trägerseitigen Ende mit dem Lastrahmen (19) und mit ihrem lastseitigen Ende mit dem Tragrahmen (11) kraftschlüssig verbunden ist/sind.

2. Anbauwaage nach Anspruch 1, dadurch gekennzeichnet, daß die beiden Rahmen (11, 19) eine nach unten hin offene (U-Form) unterschiedlicher Größe aufweisen und unter Freigang ineinandergesetzt im wesentlichen in einer gemeinsamen Ebene angeordnet sind.

3. Anbauwaage nach Anspruch 1 oder 2, dadurch gekennzeichnet, daß der Tragrahmen (11) trägerseitig und der Lastrahmen (19) lastseitig mit je einem Querriegel (14; 24') und je zwei vom mittleren Rahmenbereich schräg nach außen und unten verlaufenden Diagonalstreben (16; 52) versteift sind.

4. Anbauwaage nach einem der Ansprüche 1 bis 3, dadurch gekennzeichnet, daß die Rahmen (11, 19) aus im Querschnitt rechteckigen Hohlprofilen bestehen.

5. Anbauwaage nach einem der Ansprüche 1 bis 4, dadurch gekennzeichnet, daß der Tragrahmen (11) trägerseitig Aufnahmeelemente (6, 7, 8) für die Anbringung der Anbauwaage an einer Dreipunkt-Kupplung (9) eines Traktors (10) aufweist und daß der Lastrahmen (19) lastseitig Kupplungselemente (40) in der Form und Anordnung der Dreipunkt-Kupplung (9) des Traktors (10) oder in Form und Anordnung einer Dreieck-Schnellkupplung aufweist.

6. Anbauwaage nach einem der Ansprüche 3 bis 5, dadurch gekennzeichnet, daß der Lastaufnehmer (22) auf der Oberseite des Querriegels (14) des Tragrahmens (11) angeordnet ist und daß der Lastrahmen (19) oberhalb des Lastaufnehmers (22) eine vorspringende Druckpratze (30) aufweist, welche mit ihrer Unterseite (31) auf dem Lastaufnehmer (22) aufliegt.

7. Anbauwaage nach Anspruch 6, dadurch gekennzeichnet, daß zwischen Lastaufnehmer (22) und Druckpratze (30) ein längenverstellbares, mit dem Lastaufnehmer (22) oder der Druckpratze (30) verbundenes Zwischenglied (29), wie Gewindebolzen, angeordnet ist.

8. Anbauwaage nach Anspruch 7, dadurch gekennzeichnet, daß das Zwischenglied (29) einen um eine im wesentlichen vertikale Achse verdrehbaren und arretierbaren Exzenteraufsatz (29') aufweist.

9. Anbauwaage nach einem der Ansprüche 1 bis 8, dadurch gekennzeichnet, daß die Enden der Blattfedern (20, 21) jeweils umgebogen sind und hinter die Verbindung zwischen Federn (20, 21) und Rahmen (11, 19) darstellende Halteplatten (25, 26, 27, 28) greifen.

10. Anbauwaage nach einem der Ansprüche 1 bis 9, dadurch gekennzeichnet, daß die Waage (1) Mittel zur Anzeige einer Abweichung der Rahmen (11, 19) aus ihrer vertikalen Soll-Lage in Form eines freihängenden Pendels (37) oder einer Libelle aufweist.

11. Anbauwaage nach einem der Ansprüche 1 bis 10, dadurch gekennzeichnet, daß die beiden Rahmen (11, 19) unter Entlastung des Lastaufnehmers (22), vorzugsweise durch eine Blokkierverschraubung (32), gegeneinander arretierbar sind.

12. Anbauwaage nach einem der Ansprüche 1 bis 11, gekennzeichnet durch ein am Tragrahmen (11) angreifendes, mit diesem lösbar zu verbindendes Bodenstandgestell als Träger.

**Claims**

1. Weighing attachment for attachment to a support, in particular a tractor or similar vehicle, consisting of one rigid supporting frame (11) and load frame (19) each, substantially arranged in a vertical plane, which frames are connected together in the upper and lower frame region by at least two elastic connection members, preferably substantially horizontally extending steel leaf springs (20, 21), and are movable relative to each other in the vertical direction, the upper leaf spring(s) (20) being non-positively connected by its/their support-side end to the supporting frame (11) and by its/their load-side end to the load frame (19), with the supporting frame (11) being able to be connected to the support, with a container (2) or the like for holding material to be weighed or a load to be weighed being able to be attached to the load frame (19), and with an electronic load sensor (22) which is connected to an evaluation and display unit (39) being arranged between the two frames (11, 19), characterised in that the lower leaf spring(s) (21) is/are non-positively connected by its/their support-side end to the load frame (19) and by its/their load-side end to the supporting frame (11).

2. Weighing attachment according to Claim 1, characterised in that the two frames (11, 19) have U-shapes which open downward and are of different sizes and are arranged floating placed inside one another substantially in a common plane.

3. Weighing attachment according to Claim 1 or 2, characterised in that the supporting frame (11) on the support side and the load frame (19) on the load side are strengthened by one crossbeam (14; 24') each and two diagonal struts (16; 52) each extending diagonally outward and downward from the central frame area.

4. Weighing attachment according to one of Claims 1 to 3, characterised in that the frames (11, 19) are made of hollow profiles which are rectangular in cross-section.

5. Weighing attachment according to one of Claims 1 to 4, characterised in that the supporting frame (11) has on the support side receiving elements (6, 7, 8) for attaching the weighing attachment to a three-point linkage (9) of a tractor (10) and that the load frame (19) has on the load side linkage elements (40) in the form and layout of the three-point linkage (9) of the tractor (10) or in the form and layout of a triangular quick-fitting linkage.

6. Weighing attachment according to one of Claims 3 to 5, characterised in that the load sensor (22) is disposed on the upper side of the crossbeam (14) of the supporting frame (11) and that the load frame (19) has above the load sensor (22) a projecting pressure claw (30) which bears with its lower side (31) on the load sensor (22).

7. Weighing attachment according to Claim 6, characterised in that an intermediate member (29), such as a threaded bolt, which is adjustable in length and is connected to the load sensor (22) or the pressure claw (30) is disposed between the load sensor (22) and the pressure claw (30).

8. Weighing attachment according to Claim 7, characterised in that the intermediate member (29) has an eccentric attachment (29') which can be rotated and locked about a substantially vertical axis.

9. Weighing attachment according to one of Claims 1 to 8, characterised in that the ends of the leaf springs (20, 21) are each bent over and grip behind holding plates (25, 26, 27, 28) representing the connection between the springs (20, 21) and the frame (11, 19).

10. Weighing attachment according to one of Claims 1 to 9, characterised in that the weighing attachment (1) has means for indicating a deviation of the frame (11, 19) from its intended vertical position, in the form of a suspended pendulum (37) or a spirit level.

11. Weighing attachment according to one of Claims 1 to 10, characterised in that the two frames (11, 19) can be locked with respect to each other, unloading the load sensor (22), preferably by a blocking screw fitting (32).

12. Weighing attachment according to one of Claims 1 to 11, characterised by a ground stand frame acting on the supporting frame (11) and which can be connected detachably thereto, as a support.

**Revendications**

1. Dispositif de pesage destiné à être monté sur un porteur, en particulier un tracteur ou un véhicule analogue, composé d'un cadre porteur (11) et d'un cadre de charge (19) qui sont chacun rigides, sont disposés essentiellement dans un plan vertical, sont reliés entre eux dans leur zone supérieure et inférieure par au moins deux éléments d'assemblage élastiques, de préférence des ressorts à lames (20, 21) en acier s'étendant essentiellement horizontalement et sont mobiles l'un par rapport à l'autre en direction verticale, le(s) ressort(s) supérieur(s) (20) étant relié(s) par frottement avec leur extrémité côté porteur au cadre porteur (11) et avec leur extrémité côté charge au cadre de charge (19), le cadre porteur (11) pouvant être relié au porteur, un conteneur (2) ou analogue destiné à recevoir une marchandise ou une charge à peser pouvant être rapporté sur le cadre de charge (19) et un capteur de charge (22) électronique relié à une unité d'interprétation et d'affichage (39) étant disposé entre les deux cadres (11, 19), caractérisé en ce que le(s) ressort(s) inférieur(s) (21) est(sont) relié(s) par frottement avec leur extrémité côté porteur au cadre de charge (19) et avec leur extrémité côté charge au cadre porteur (11).

2. Dispositif de pesage selon la revendication 1, caractérisé en ce que les deux cadres (11, 19) présentent une forme en U ouverte vers le bas de taille différente et sont disposés essentiellement dans un plan commun en étant placés l'un dans l'autre avec mobilité.

3. Dispositif de pesage selon la revendication 1 ou 2, caractérisé en ce que le cadre porteur (11) et le cadre de charge (19) sont renforcés respectivement côté porteur et côté charge par une traverse (14 ; 24') et deux contre-fiches diagonales (16 ; 52) s'étendant en biais vers l'extérieur et le bas à partir de la zone médiane du cadre.

4. Dispositif de pesage selon l'une des revendications 1 à 3, caractérisé en ce que les cadres (11, 19) sont composés de profilés creux de section transversale carrée.

5. Dispositif de pesage selon l'une des revendications 1 à 4, caractérisé en ce que le cadre porteur (11) présente côté porteur des éléments de réception (6, 7, 8) pour monter le dispositif de pesage sur un attelage à trois points (9) d'un tracteur (10) et en ce que le cadre de charge (19) présente côté charge des éléments d'accouplement (40) correspondant à la forme et à l'agencement de l'attelage à trois points (9) du tracteur (10) ou selon la forme et l'agencement d'un accouplement rapide triangulaire.

6. Dispositif de pesage selon l'une des revendications 3 à 5, caractérisé en ce que le capteur de charge (22) est disposé sur le côté supérieur de la traverse (14) du cadre porteur (11) et en ce que le cadre de charge (19) présente au-dessus du capteur de charge (22) une patte de pression saillante (30) qui repose avec son côté inférieur (31) sur le capteur de charge (22).

7. Dispositif de pesage selon la revendication 6, caractérisé en ce qu'un organe intermédiaire (29), tel qu'un boulon fileté, réglable en longueur et relié au capteur de charge (22) ou à la patte de pression (30), est disposé entre le capteur de charge (22) et la patte de pression (30).

8. Dispositif de pesage selon la revendication 7, caractérisé en ce que l'organe intermédiaire (29) présente une garniture excentrique (29') pouvant tourner autour d'un axe essentiellement vertical et être bloquée.

9. Dispositif de pesage selon l'une des revendications 1 à 8, caractérisé en ce que les extrémités des ressorts à lames (20, 21) sont recourbées et s'engagent derrière les plaques de maintien (25, 26, 27, 28) constituant la liaison entre ressorts (20, 21) et cadres (11, 19).

10. Dispositif de pesage selon l'une des revendications 1 à 9, caractérisé en ce que le dispositif de pesage (1) présente des moyens d'affichage d'un écart des cadres (11, 19) par rapport à leur position de consigne verticale qui se présentent sous la forme d'un pendule suspendu librement (37) ou d'un niveau à bulle.

11. Dispositif de pesage selon l'une des revendications 1 à 10, caractérisé en ce que les deux cadres (11, 19) peuvent être bloqués l'un par rapport à l'autre de préférence par un dispositif de blocage à vis (32) de manière à décharger le capteur de charge (22).

12. Dispositif de pesage selon l'une des revendications 1 à 11, caractérisé par une baie constituant un support qui mord sur le cadre porteur (11) et est reliée audit cadre de manière amovible.

Fig.1

Fig.2

Fig.3a     Fig.3b

Fig.4

Fig.5

EP 0 222 230 B1

Fig.6

Fig.7

EP 0 222 230 B1